(19) Europäisches Patentamt
European Patent Office
Office européen des brevets

(11) EP 3 438 708 A1

(12) EUROPEAN PATENT APPLICATION
published in accordance with Art. 153(4) EPC

(43) Date of publication:
06.02.2019 Bulletin 2019/06

(51) Int Cl.:
G02B 5/02 (2006.01)    B32B 7/02 (2019.01)
B32B 9/00 (2006.01)    B32B 17/06 (2006.01)
C03C 17/42 (2006.01)    G02B 1/18 (2015.01)

(21) Application number: 17774814.2

(22) Date of filing: 24.03.2017

(86) International application number:
PCT/JP2017/012169

(87) International publication number:
WO 2017/170277 (05.10.2017 Gazette 2017/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 31.03.2016 JP 2016071410

(71) Applicant: Dexerials Corporation
Tokyo 141-0032 (JP)

(72) Inventors:
• WADA Yutaka
Tokyo 141-0032 (JP)
• NAGAHAMA Tsutomu
Tokyo 141-0032 (JP)
• ARIMA Mitsuo
Tokyo 141-0032 (JP)

(74) Representative: Murgitroyd & Company
Scotland House
165-169 Scotland Street
Glasgow G5 8PL (GB)

(54) OPTICAL BODY AND GLASS MATERIAL

(57) Provided is an optical body excellent in anti-glare property and viewing property. The optical body includes a fine concavo-convex layer and a first transparent inorganic layer, the first inorganic layer being disposed on a fine concavo-convex surface side of the fine concavo-convex layer, and satisfies $\theta_2/\theta_1 > 7$ in a graph with X-axis of reflection angle (°) and Y-axis of luminance, the graph being prepared in relation to a plane obtained by collecting luminance data of reflection light toward all the vectors obtained when light is caused to incident at an incident angle of 60° from the first transparent inorganic layer side of the optical body, and by selecting the plane including a vector representing the maximum luminance ($L_{max}$) at the incident point the light and a normal vector to the optical body, the normal vector passing through the incident point of light, where $\theta_1$ (°) represents the width of the reflection angles each indicating 90% luminance of $L_{max}$ and $\theta_2$ (°) represents the width of reflection angles each indicating 10% luminance of $L_{max}$.

FIG. 7

EP 3 438 708 A1

**Description**

[Cross Reference to Related Application]

The subject application claims priority from Japanese Patent Application No. 2016-071410 (filed on March 31, 2016), the entire disclosure of which is incorporated herein for reference.

TECHNICAL FIELD

The present disclosure relates to an optical body and a glass material, and more particularly, to an optical body excellent in both anti-glare and viewing properties, and to a glass material including the same.

BACKGROUND

Recent years have often seen a problem of so-called reflected light pollution, in which light reflected on windowpanes installed in architectural structures such as high-rise buildings and towering condominiums causes glare to users of other neighboring buildings. Thus, in constructing architecture, adequate measures need to be taken against the aforementioned reflected light pollution.

Here, examples of such measures against glare caused by reflected light from windowpanes of architecture may include a method of installing louvers on walls of the architecture to directly shield the reflected light. However, the installation of louvers involves a large scale of work and high cost, and even affects the design of the architecture, which is thus often least desired by the owner.

Meanwhile, in addition to the aforementioned method, another method available for improving anti-glare property of windowpanes of architecture may include a method of applying a film onto the windowpane to improve reflection property thereof.

For example, as a film for possibly improving anti-glare property of a windowpane, Patent Literature (PTL) 1 discloses a film capable of suppressing, when attached to a windowpane, glare caused by reflected light, the film having, on a surface thereof, a light diffusion layer and a multi-layer anti-reflection film, the light diffusion layer being prepared from a mixture of resin and fine particles of a silicon compound or of a metal compound, the film having the transmitted image clarity of 10% or more at an optical comb width of 0.5 mm.

CITATION LIST

Patent Literature

PTL 1: JPH10128899A

SUMMARY

(Technical Problem)

However, the aforementioned conventional film contains fine particles as a substantially essential component in the light diffusion layer, and thus is imparted with haze to obtain anti-glare property. However, such haze alone is inadequate as an index to represent viewing property. Thus, the aforementioned conventional film still leaves room for improvement for at least achieving both anti-glare and viewing properties. In addition, the aforementioned conventional film has also been required to be further improved in viewing property.

It could therefore be helpful to provide an optical body excellent in anti-glare property and viewing property, and a glass material excellent in anti-glare property and viewing property.

(Solution to Problem)

In light of the above, we have made extensive studies on various matters without being limited to films. As a result, we have found that a surface structure may be formed to provide a specific mode of a peak of BRDF (Bidirectional Reflectance Distribution Function) in incident light at an incident angle of 60°, to thereby achieve excellent anti-glare property as well as viewing property.

Based on the aforementioned findings, we provide:

<1> An optical body comprising a fine concavo-convex layer and a first transparent inorganic layer,

the first transparent inorganic layer being disposed on a fine concavo-convex surface side of the fine concavo-convex layer;

the optical body satisfying $\theta_2/\theta_1 > 7$, in a graph with X-axis of reflection angle (°) and Y-axis of luminance, the graph being prepared in relation to a plane obtained by collecting luminance data of reflection light toward all the vectors obtained when light is caused to incident at an incident angle of 60° from the first transparent inorganic layer side of the optical body, and by selecting the plane including a vector representing the maximum luminance value ($L_{max}$) from an incident point of the light and a normal vector to the optical body, the normal vector passing through the incident point of the light, where $\theta_1$ (°) represents the width between the reflection angles each indicating 90% luminance of $L_{max}$ and $\theta_2$ (°) represents the width between the reflection angles each indicating 10% luminance of $L_{max}$.

In the optical body described in <1> above, $\theta_2/\theta_1 > 7$ may be established for a surface on the fine concavo-convex surface side of the fine concavo-convex layer, to thereby improve anti-glare property and viewing property.

<2> The optical body according to item <1> above, in which the optical body has a glossiness of 20 or less at a measurement angle of 20° and a transmitted image clarity of 50% or more at an optical comb width of 2 mm.

<3> The optical body according to items <1> or <2> above, in which the fine concavo-convex surface of the fine concavo-convex layer has a root mean square gradient $R\Delta q$ of 0.07 or more.

<4> The optical body according to any of items <1> to <3> above, in which the first transparent organic layer contains, as a main component, an inorganic compound having a band gap of 3.0 eV or more and 3.7 eV or less.

<5> The optical body according to any of items <1> to <4> above, in which the first transparent organic layer includes at least any of ZnO and $CeO_2$.

<6> The optical body according to any of items <1> to <5> above, in which the first transparent organic layer has a thickness of 70 nm or more and 400 nm or less.

<7> The optical body according to any of items <1> to <6> above, comprising a soil-resistant coating layer on the first transparent inorganic layer.

<8> The optical body according to any of items <1> to <6> above, further comprising a second transparent inorganic layer on the first transparent inorganic layer.

<9> The optical body according to item <8> above, in which the second transparent inorganic layer contains, as a main component, an inorganic compound having a band gap that is 4.0 eV or more larger than the band gap of a main component of the first transparent inorganic layer.

<10> The optical body according to items <8> or <9> above, in which the second transparent inorganic layer includes at least any of $SiO_2$, SiN, SiON, and $MgF_2$.

<11> The optical body according to any of items <8> to <10> above, in which the second transparent inorganic layer has a thickness of 40 nm or more and 140 nm or less.

<12> The optical body according to any of items <8> to <11> above, comprising a soil-resistant coating layer on the second transparent inorganic layer.

<13> The optical body according to any of items <1> to <12> above, in which the optical body has a visible light transmittance of 20% or more and 90% or less.

<14> The optical body according to any of items <1> to <13> above, in which the optical body has a solar absorption of 45% or less.

<15> The optical body according to items <1> to <14> above, in which the optical body has a light transmittance of 10% or less at a wavelength of 320 nm.

<16> A glass material comprising a glass substrate and the optical body according to any of items <1> to <15> above. The glass material according to item <16> above includes the aforementioned optical body, and thus is high in both anti-glare property and viewing property.

<17> The glass material of item <16> above, the glass material comprises multi-layered glass.


(Advantageous Effect)


The optical body disclosed herein is excellent in both anti-glare property and viewing property, and the glass material disclosed herein is excellent in both anti-glare property and viewing property.


BRIEF DESCRIPTION OF THE DRAWINGS


In the accompanying drawings:


FIG. 1 is a schematic diagram illustrating an exemplary method for forming a fine concavo-convex layer of an optical body according to an embodiment disclosed herein;

FIG. 2 is a schematic sectional view illustrating a configuration example of the disclosed optical body according to an embodiment;

FIG. 3 is a schematic sectional view illustrating a configuration example of the disclosed optical body according to an embodiment;

FIG. 4 is a schematic sectional view illustrating a configuration example of the disclosed optical body according to an embodiment;

FIG. 5a is a graph of reflectance with respect to the thickness of each layer of a laminate including a ZnO layer and a $SiO_2$ layer both disposed on a PET base material;

FIG. 5b is a graph of reflectance with respect to the thickness of each layer of a laminate including a ZnO layer and a $SiO_2$ layer both disposed on a PET base material;

FIG. 6 is a schematic sectional view illustrating a configuration example of the disclosed optical body according to an embodiment;

FIG. 7 is a schematic chart illustrating an example of measurement results of BRDF of an optical body;

FIG. 8 is a schematic sectional view illustrating a configuration example of the disclosed glass material according to an embodiment;

FIG. 9 is a schematic sectional view illustrating configuration examples of the disclosed glass material according to an embodiment;

FIG. 10 is a plot illustrating a relation between $\theta_2/\theta_1$ and glossiness G of the disclosed optical body according to an embodiment;

FIG. 11 is a plot illustrating a relation between $\theta_2/\theta_1$ and a transmitted image clarity T of the disclosed optical body according to an embodiment;

FIG. 12 is a plot illustrating a relation between $R\Delta q$ and glossiness G of the disclosed optical body according to an embodiment;

FIG. 13A is a transmittance spectrum for each degraded wavelength observed for the disclosed optical body according to an embodiment which has been spectrally irradiated to be degraded;

FIG. 13B is a transmittance spectrum for each degraded wavelength observed for the disclosed optical body according to an embodiment which has been spectrally irradiated to be degraded;

FIG. 14 is a graph illustrating a relation between a degraded wavelength and a light transmittance at a wavelength of 420 nm, observed for the disclosed optical body according to an embodiment which has been spectrally irradiated to be degraded; and

FIG. 15 is a graph illustrating a relation between a light transmittance at a wavelength of 320 nm and an irradiation amount that reaches the degree of yellowness of $\Delta YI=6$, observed for the disclosed optical body according to an embodiment.

DETAILED DESCRIPTION

(Optical Body)

The disclosed optical body according to an embodiment includes at least a fine concavo-convex layer and a first transparent inorganic layer, and further includes, as necessary, a second transparent inorganic layer, a soil-resistant coating layer, and/or other layers.

Here, the optical body being "transparent" or "has transparency" as disclosed herein refers to an optical body that is high in transmitted image clarity, allowing clear visual identification of an image through the optical body.

<Fine Concavo-convex Layer>

The fine concavo-convex layer has a fine concavo-convex structure on a surface thereof. This concavo-convex structure may be formed in a regular pattern or in a random manner.

The fine concavo-convex layer may have an arithmetic average roughness Ra preferably of 100 nm or more, and preferably of 250 nm or less. Ra of 100 nm or more allows for improving anti-glare property and Ra of 250 nm or less allows for readily providing a desired viewing property.

In the fine concavo-convex layer, the root mean square gradient (root mean square gradient in a rough curve element) $R\Delta q$ of the fine concavo-convex surface may preferably be 0.07 or more. $R\Delta q$ being 0.07 or more allows for sufficiently improving the anti-glare property of the optical body. From the same standpoint, $R\Delta q$ of the fine concavo-convex layer may preferably be 0.2 or more, and more preferably be 0.3 or more.

Further, in the fine concavo-convex layer, a mean length RSm of a rough curve element of the fine concavo-convex surface may preferably be 40 $\mu$m or less. RSm being 40 $\mu$m or less allows for improving viewing property. From the same standpoint, RSm of the fine concavo-convex layer may preferably be 15 $\mu$m or less, and more preferably be 10 $\mu$m or less.

Here, Ra, RSm, and RΔq of the fine concavo-convex layer as described above may be measured by, for example, methods used in Examples.

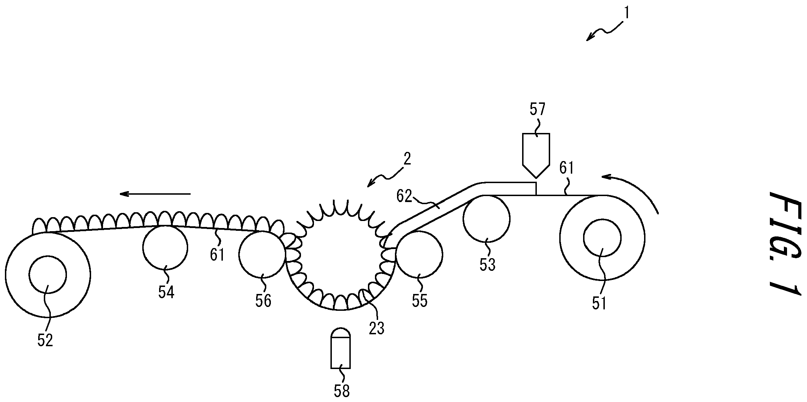

Here, the fine concavo-convex layer may be formed by, for example, a shape transfer method. Explained below with reference to FIG. 1 is how to form the fine concavo-convex layer by a shape transfer method.

FIG. 1 is a schematic diagram illustrating a shape transfer method as an example of a method for forming a fine concavo-convex layer of the disclosed optical body according to this embodiment. A shape transfer system 1 of FIG. 1 includes: a master disc 2, a base material supply roll 51, a winding roll 52, guide rolls 53, 54, a nip roll 55, a peeling roll 56, a coating device 57, and a light source 58.

The base material supply roll 51 has a sheet-like base material 61 wound thereon in a roll shape, and the winding roll 52 is to wind up the base material 61 laminated with a resin layer 62 having a fine concavo-convex structure 23 transferred thereonto. Further, the guide rolls 53, 54 are to convey the base material 61. The nip roll 55 is to bring the base material 61 laminated with the resin layer 62 into close contact with the master disc 2 of cylinder shape, and the peeling roll 56 is to peel off, from the the master disc 2, the base material 61 laminated with the resin layer 62 after the fine concavo-convex structure 23 has been transferred to the resin layer 62. Here, the base material 61 may be formed as a plastic base material made of a PET resin or a polycarbonate resin, or may be formed as a transparent plastic film.

The coating device 57 includes a coating means such as a coater, so as to coat a composition including an ultraviolet curing resin (ultraviolet curing resin composition) onto the base material 61, to thereby form the resin layer 62. The coating device 57 may be, for example, a gravure coater, a wire bar coater, or a die coater. Further, the light source 58 emits ultraviolet light, and may be configured as, for example, an ultraviolet lamp.

The ultraviolet curing resin, when irradiated with ultraviolet rays, is reduced in fluidity to be cured, and specific example thereof may include an acrylic resin. Further, the ultraviolet curable resin composition may contain, as necessary: an initiator; a filler; functional additives; a solvent; an inorganic material; a pigment; an antistatic agent; or a sensitizing dye.

In the shape transfer system 1, the base material 61 of sheet shape is continuously send out from the base material supply roll 51 via a guide roll 53. The ultraviolet curable resin composition is coated, by the coating device 57, onto the base material 61 thus sent out, so that the resin layer 62 is laminated onto the base material 61. Then, the nip roll 55 brings the base material 61 laminated with the resin layer 62 into close contact with the master disc 2. In this manner, the fine concavo-convex structure 23 formed on the outer circumference surface of the master disc 2 is transferred to the resin layer 62. The resin layer 62, onto which the fine concavo-convex structure 23 has been transferred, is cured when irradiated with light from the light source 58. Then, the base material 61 having the cured resin layer 62 laminated thereon is peeled off from the master disc 2 by the peeling roll 56, and wound by the winding roll 52 via the guide roll 54.

The shape transfer system 1 configured as described above is capable of successively forming, on the base material 61, a fine concavo-convex layer having a fine concavo-convex surface. Here, the fine concavo-convex structure 23 of the master disc 2, for example, may be changed as appropriate, so as to adjust Ra, RSm, and RΔq of the fine concavo-convex surface.

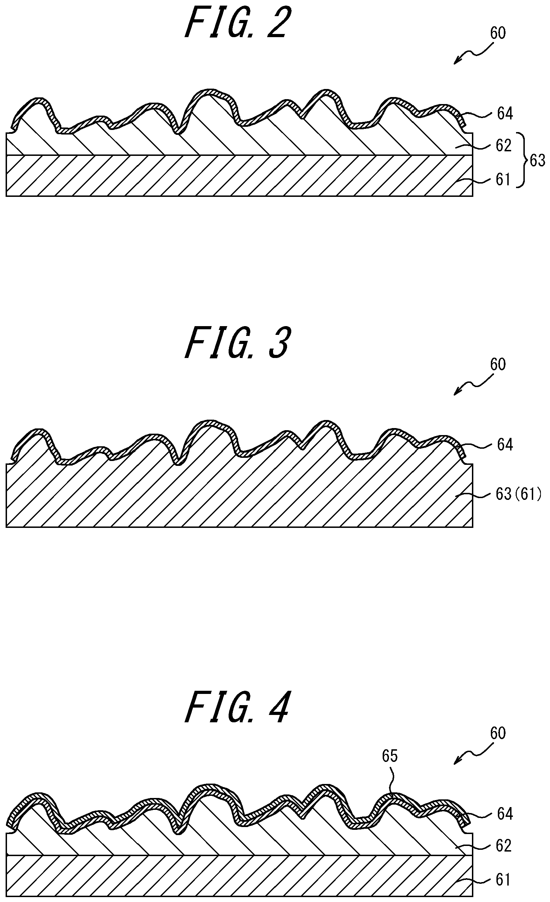

In the aforementioned shape transfer method, a base material and an ultraviolet curable resin are prepared, and the resin is used to form a fine concavo-convex layer onto the base material (i.e., as illustrated in FIG. 2, the fine concavo-convex layer 63 includes the base material 61 and the resin layer 62 having a fine concavo-convex structure). However, without being limited to the above, the fine concavo-convex layer of the disclosed optical body may be formed of a base material made of a resin such as, for example, an ultraviolet curable resin or a thermoplastic resin, so that the micro concavo-concave structure may be directly formed therein (i.e., as illustrated in FIG. 3, the fine concavo-convex layer 63 may be formed of the base material 61 alone).

<First Transparent Inorganic Layer>

The disclosed optical body according to this embodiment includes a first transparent inorganic layer. The first transparent inorganic layer is transparent and serves to absorb light having a predetermined wavelength. The first transparent inorganic layer is disposed on the fine concavo-convex surface side of the fine concavo-convex layer as illustrated in FIGS. 2, 3, and may be formed, for example, by a sputtering method.

The first transparent inorganic layer preferably contains, as a main component thereof, an inorganic compound having a band gap of 2.8 eV or more and 4.8 eV or less. Here, the band gap represents the wavelength of the absorption edge, which, in a broad sense, absorbs light having a wavelength falling below that of the band gap while transmits light having a wavelength equal to or above the wavelength corresponding to the band gap. Then, the aforementioned band gap of 2.8 eV or more and 4.8 eV or less indicates that the wavelength of the absorption edge can be found within a range of 260 nm or more and 440 nm or less, which is substantially a boundary between an ultraviolet region and a visible region, based on the relational expression: "$\lambda$ (nm) = 1240/E (eV)" between a wavelength $\lambda$ and a band gap energy E obtained by using Planck constant ($6.626 \times 10^{-34}$ J·s) and the speed of light ($2.998 \times 10^8$ m/s). Accordingly, the aforementioned inorganic compound may be used for the first transparent inorganic layer, to thereby provide both transparency and ultraviolet absorption property. From the same standpoint, the first transparent inorganic layer may further preferably contain, as a main component, an inorganic compound having a band gap of 3.0 eV or more and 3.7 eV or less (approximately 340 nm or more and 420 nm or less in terms of wavelength). Further, given that the layer is to be reduced in thickness in order to suppress risk of productivity reduction and crack generation, the first transparent inorganic layer may preferably include, as a main component thereof, an inorganic compound having a band gap of 3.0 eV or more and 3.4 eV or less (approximately 360 nm or more and 420 nm or less, in terms of wavelength).

As disclosed herein, the "main component" refers to a component that is contained at the largest content.

Specific examples of the inorganic compound having a band gap of 2.8 eV or more and 4.8 eV or less may include: $ZnO$; $CeO_2$; $TiO_2$; $SnO_2$; $In_2O_3$; $Nb_2O_5$; $Ta_2O_5$; SiC; and ZnS. Further, specific examples of an inorganic compound having a band gap of 3.0 eV or more and 3.7 eV or less may include: $ZnO$; $CeO_2$; $TiO_2$; $Nb_2O_5$; SiC; and ZnS. Moreover, specific examples of an inorganic compound having a band gap of 3.0 eV or more and 3.4 eV or less may include: $ZnO$ and $CeO_2$. In consideration of the above, the first transparent inorganic layer may preferably include at least either one of $ZnO$ and $CeO_2$.

The aforementioned inorganic compounds may each be used one kind alone for the first transparent inorganic layer, or may be used in combination of two or more kinds for the first transparent inorganic layer.

The first transparent inorganic layer may preferably have a thickness of 70 nm or more and 400 nm or less. The first transparent inorganic layer with a thickness of 70 nm or more can provide sufficiently high ultraviolet absorption property, and can suppress, with a thickness of 400 nm or less, risk of productivity reduction and crack generation. From the same standpoint, the first transparent inorganic layer may preferably have a thickness of 100 nm or more and 300 nm or less.

<Second Transparent Inorganic Layer>

The disclosed optical body according to this embodiment preferably further includes, in addition to the first transparent inorganic layer 64, the second transparent inorganic layer 65 disposed on the first transparent inorganic layer 64, as illustrated in FIG. 4. The second transparent inorganic layer thus provided allows for preventing adhesion of soil to the first transparent inorganic layer due to rain or the like. The second transparent inorganic layer, which has transparency and may be water repellent or hydrophilic, may be formed by, for example, a sputtering method.

The second transparent inorganic layer has a main component having a band gap which is preferably larger than the band gap of the main component of the first transparent inorganic layer. More specifically, the second transparent inorganic layer may preferably contain, as the main component, an inorganic compound having a band gap of 4.0 eV or more larger than the band gap of the main component of the first transparent inorganic layer. The main component of the second transparent inorganic layer having a band gap larger, suitably 4.0 eV or more larger, than the band gap of the main component of first transparent inorganic layer allows for improving, in addition to improving the soil-resistant property of first transparent inorganic layer, the anti-glare property of the resulting optical body.

Specifically, preferred examples of main components of the second transparent inorganic layer include an inorganic compound such as $SiO_2$, SiN, SiON, and $MgF_2$. In other words, the second transparent inorganic layer may preferably include: at least either one of $SiO_2$, SiN, SiON, and $MgF_2$.

The aforementioned inorganic compounds may each be used one kind alone for the second transparent inorganic layer, or may be used in combination of two or more kinds for the second transparent inorganic layer.

The second transparent inorganic layer may preferably have a thickness of 40 nm or more and 140 nm or less. The second transparent inorganic layer having a thickness of 40 nm or more and 140 nm or less allows for sufficiently reducing the reflectance and further effectively improve anti-glare property. From the same standpoint, the second transparent inorganic layer may further preferably have a thickness of 60 nm or more and further preferably 120 nm or less.

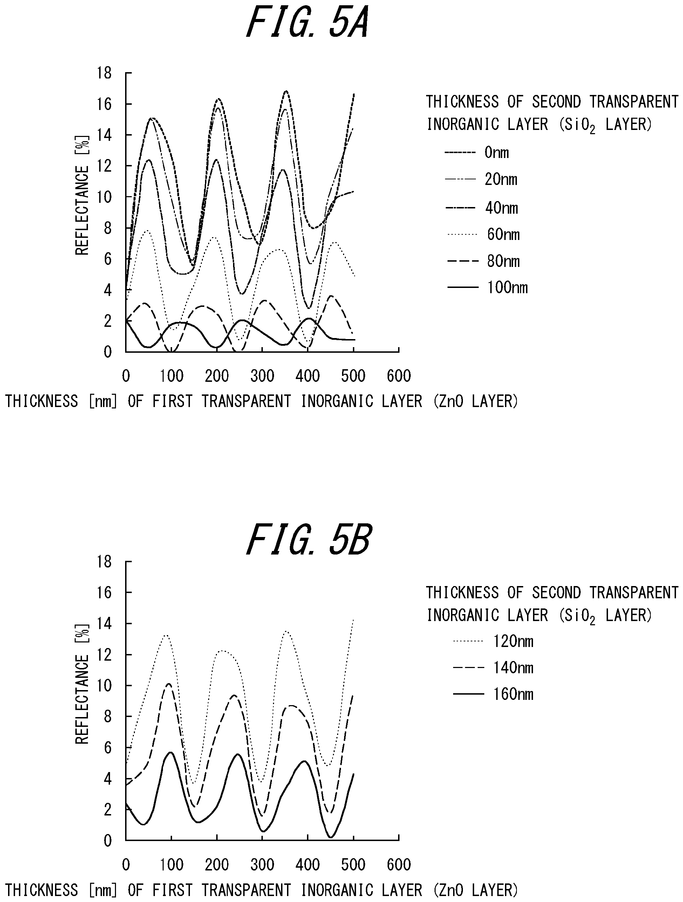

For reference, FIGS. 5a and 5b each schematically illustrate a graph of reflectance with respect to the thickness of each layer of a laminate including a ZnO layer as the first transparent inorganic layer and a $SiO_2$ layer as the second transparent inorganic layer both disposed on a PET base material. As can be seen from the drawings, the reflectance may periodically increase or decrease along with increase in thickness of the first transparent inorganic layer. Further, as can be seen from the drawings, the reflectance increases along with increase in thickness of the second transparent inorganic layer until the thickness of the second transparent inorganic layer reaches about 100 nm; however, when the thickness further increases, the reflectance starts to increase. In view of the above, the thickness of the first transparent inorganic layer and the thickness of the second transparent inorganic layer may desirably be selected respectively in consideration of ultraviolet absorption property, reflectance, cracking, and productivity.

<Soil-Resistant Coating Layer>

The disclosed optical body according to this embodiment preferably includes a soil-resistant coating layer on the outermost surface on the fine concavo-convex surface side of the fine concavo-convex layer. Specifically, the disclosed optical body according to this embodiment may preferably include a soil-resistant coating layer disposed on the first transparent inorganic layer or on the second transparent inorganic layer. The soil-resistant coating layer thus provided allows for reducing adhesion of soil to the optical body, while making it easy to remove adhered soil, to thereby allow the optical body to exert desired performance for a longer period.

Here, the soil-resistant coating layer may preferably be provided on the second transparent inorganic layer containing $SiO_2$ as a main component in view of high adhesiveness.

Components contained as the main components in the soil-resistant coating layer may be water repellent or hydrophilic, or may be oil repellent or lipophilic. However, in view of more effectively improving the soil-resistant property, the main component of the soil-resistant coating layer may preferably be water repellent as well as oil repellent. More specifically, as to the water repellent property, the pure water contact angle of the soil-resistant coating layer may preferably be 110° or more, and more preferably be 115° or more. The soil-resistant coating layer may preferably include perfluoropolyether as a main component having the aforementioned property.

The soil-resistant coating layer has a thickness which is preferably of 5 nm or more, and preferably of 20 nm or less, and for example, of 10 nm. The soil-resistant coating layer with a thickness of 5 nm or more allows for sufficiently increasing the soil-resistance property of the optical body, and the soil-resistant coating layer with a thickness of 20 nm or less allows for preventing the concavo-convex structure of the fine concavo-convex layer from being buried.

<Other Layers>

The disclosed optical body of this embodiment may include, without being particularly limited, other layers than those layers described above.

For example, the disclosed optical body may include an adhesion layer between the aforementioned fine concavo-convex layer and the first transparent inorganic layer, so as to firmly adhere those layers to each other. An example of this adhesion layer may include, a $SiO_x$ layer, having a thickness of, for example, 2 nm or more and 10 nm or less. The adhesion layer may be formed by, for example, a sputtering method.

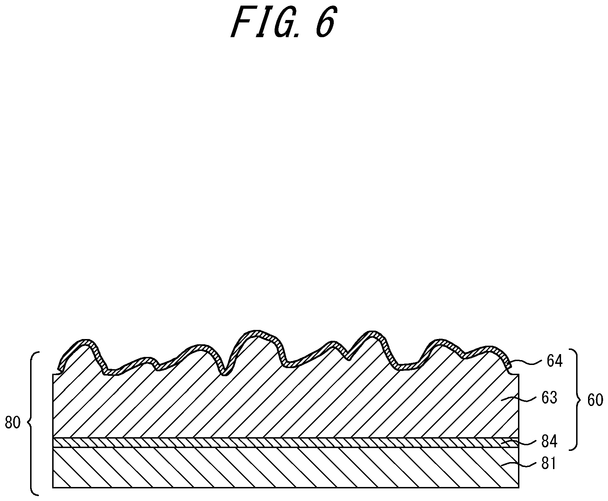

Further, the disclosed optical body of this embodiment may preferably include a visible light absorbing adhesive layer, which may be disposed on a face opposite to the face where the first transparent inorganic layer is disposed. The visible light absorbing adhesive layer thus disposed on a face opposite to a face where first transparent inorganic layer is disposed allows for, in the glass material 80 which has a glass substrate 81 laminated on a face provided with the adhesive layer 84 of the optical body as illustrated in FIG. 6, efficiently absorbing: visible light that has passed through the first transparent inorganic layer 64 and the fine concavo-convex layer 63 to be incident on the adhesive layer 84; and visible light that has passed through the first transparent inorganic layer 64, the fine concavo-convex layer 63, and the adhesive layer 84, to be reflected by the glass substrate 81 and incident on the adhesive layer 84, to thereby reduce the visible light transmittance while maintaining high viewing property, so as to further improve anti-glare property. In addition, adhesive layers different from one another in visible light absorptance may be used, which leads to an advantage of readily providing a product lineup with a variety of glossiness.

Here, the visible light absorbing adhesive layer may be prepared by using a material with adhesiveness, into with a coloring agent such as visible light absorbing dyes or pigments is dispersed at an arbitrary ratio.

On the other hand, for example, when the content of visible light absorbing dyes or pigments is too large to cause deficiencies such as reduction in adhesion or deterioration of durability, a base material containing visible light absorbing dyes or pigments or a visible light absorbing inorganic film such as DLC to absorb visible light may be laminated on the fine concavo-convex layer.

<Property of Optical Body>

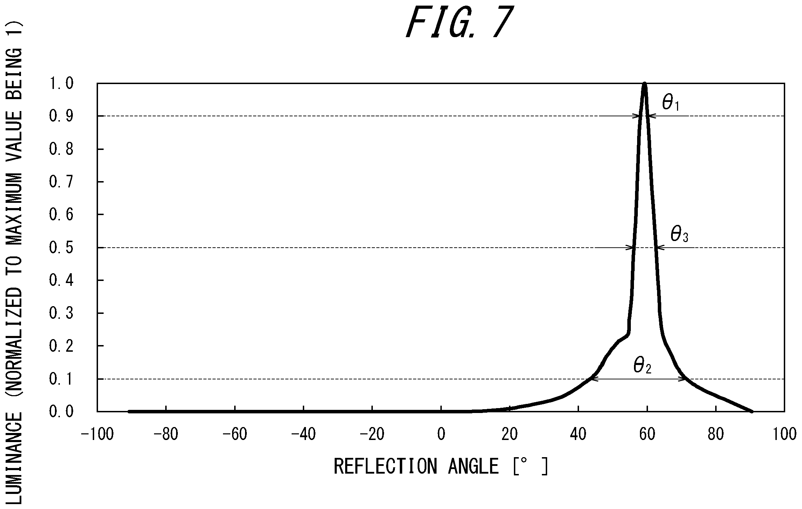

The disclosed optical body according to this embodiment has a feature in BRDF (Bidirectional Reflectance Distribution Function) obtained when light is caused to incident at an incident angle of 60°. To measure BRDF of the optical body, first, light is caused to incident at an incident angle of 60° from the side where the first transparent inorganic layer of the optical body is disposed, so as to collect luminance data of reflection light toward all the vectors. Then, among the collected data, a vector representing the maximum luminance value ($L_{max}$) from an incident point the light is identified, and a plane including a vector indicating $L_{max}$ from the incident point of the light and a normal vector to the optical body, the normal vector passing through the incident point of light, is selected. BRDF is a chart (graph) presented on a coordinate with X-axis of reflection angle (°) and Y-axis of luminance, with respect to the plane. For reference, FIG. 7 schematically illustrates an example of measurement results of BRDF.

BRDF mentioned above may be measured by, for example, methods used in Examples.

Then, the disclosed optical body of this embodiment needs to satisfy $\theta_2/\theta_1 > 7$, where, in the aforementioned chart, $\theta_1$ (°) represents the width between the reflection angles each indicating 90% luminance of $L_{max}$ and $\theta_2$ (°) represents the width between the reflection angles each indicating 10% luminance of $L_{max}$. We have made extensive studies to surprisingly find that the anti-glare property and the viewing property are both attained when $\theta_2$ exceeds 7-fold of $\theta_1$. The disclosed optical body of this embodiment may preferably satisfy $\theta_2/\theta_1 \geq 9$ in view of achieving both the anti-glare property and the viewing property at higher levels.

Further, in the disclosed optical body of this embodiment, $\theta_3$ is preferably 30° or less in the aforementioned chart, where $\theta_3$ (°) is the width (i.e., full width at half maximum) between the reflection angles representing 50% luminance of $L_{max}$. $\theta_3$ of 30° or less allows for improving the viewing property. From the same standpoint, $\theta_3$ may preferably be 25° or less, and more preferably be 20° or less.

The disclosed optical body according to this embodiment may preferably has a glossiness of 20 or less at a measuring angle of 20°. The glossiness of 20 or less at a measuring angle of 20° allows for providing the optical body with sufficiently high anti-glare property. From the same standpoint, the optical body may further preferably have a glossiness of 10 or less at a measuring angle 20°.

Here, the glossiness of the optical body at the measurement angle of 20° may be measured by, for example, methods used in Examples.

The disclosed optical body of this embodiment may preferably have the transmitted image clarity of 50% or more at an optical comb width of 2 mm. The transmitted image clarity of 50% or more at an optical comb width of 2 mm allows for increasing viewing property of the optical body sufficiently high. From the same standpoint, the transmitted image clarity of the optical body at an optical comb width of 2 mm may preferably be 70% or more, and further preferably 80% or more.

Here, the transmitted image clarity at an optical comb width of 2 mm may be measured by, for example, methods used in Examples.

The disclosed optical body of this embodiment preferably has a visible light transmittance of 20% or more and 90% or less. The optical body having the visible light transmittance of 20% or more is capable of preventing, when disposed as part of windowpanes of architecture, getting dark indoors to cause deterioration in viewing property. The optical body having the visible light transmittance of 90% or less is capable of suppressing glossiness, which is considered proportional to the visible light transmittance, to thereby maintain high anti-glare property. From the same standpoint, the optical body may preferably have a visible light transmittance of preferably 30% or more, more preferably 70% or less, and further preferably 55% or less. When the optical body is used multi-layered glass to be described later, the optical body may have a visible light transmittance of 70% or less, which can suitably suppress glare to the same degree or further than as in the case of single-layer glass.

The optical body may be measured for visible light transmittance by, for example, methods used in Examples.

The disclosed optical body of this embodiment may preferably have an ultraviolet transmittance of 15% or less. The optical body having the ultraviolet transmittance of 15% or less is capable of preventing deterioration of base materials such as yellowing due to ultraviolet rays, while improving adhesion durability between the base material and an ultraviolet curable resin. From the same standpoint, the optical body preferably has an ultraviolet transmittance of 10% or less.

The optical body may be measured for ultraviolet transmittance using, for example, a spectrophotometer "V-560" manufactured by JASCO corporation, conforming to JIS A5759.

Further, the disclosed optical body of this embodiment has may preferably have a transmittance of 10% or less of light having the wavelength of 320 nm, which is more preferably preferably 6% or less, and further preferably 3% or less. The optical body having a transmittance of 10% of light having a wavelength of 320 nm is capable of effectively suppressing deterioration of base material such as yellowing due to ultraviolet rays, while improving adhesion durability between the base material and a resin layer (for the details, see the description of Examples 16 to 18).

The optical body may be measured for the light transmittance at a wavelength of 320 nm by, for example, methods used in Examples.

Further, the disclosed optical body according to this embodiment may preferably have a solar absorptance of 45% or less. The optical body having a solar absorptance of 45% or less is capable of suppressing risk of thermal cracking of the glass. From the same standpoint, the optical body may further preferably have a solar absorptance of 30% or less. The optical body may be calculated for solar absorptance ($\alpha_e$) using the following formula:

$$\alpha_e = 100 - \tau_e - \rho_e,$$

where $\tau_e$ represents solar transmittance and $\rho_e$ represents solar absorptance which were measured conforming to JIS A5759.

(Glass Material)

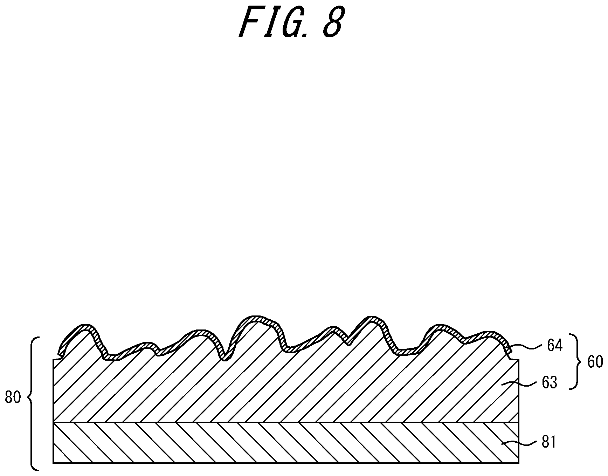

The disclosed glass material according to an embodiment includes a glass substrate and the aforementioned optical body. As specifically illustrated in FIG. 8, a glass material 80 may be formed by laminating the aforementioned optical body 60 and the glass substrate 81 in such a manner that a face of the optical body 60 facing the glass substrate 81 is free of the first transparent inorganic layer 64. In this manner, the glass material according to this embodiment at least includes the aforementioned optical body, so as to be excellent in both anti-glare property and viewing property, which thus can be suitably used as, for example, construction windowpanes for high-rise buildings and houses, and window glasses for vehicles.

Here, the glass material of this embodiment may include the aforementioned optical body either only on one face or both faces of the glass substrate.

The glass material according to this embodiment may preferably satisfy $\theta_2/\theta_1 > 7$, from the same standpoint as in the aforementioned optical body. Further, in the glass material of this embodiment, preferred ranges for the glossiness at a measuring angle of 20°, the transmitted image clarity at an optical comb width of 2 mm, the visible light transmittance, the ultraviolet transmittance, the light transmittance at wavelength of 320 nm, and the solar absorptance and the reasons therefor are similar to those mentioned above as to the optical body.

The disclosed glass material according to this embodiment may be multi-layered glass. In general, multi-layered glass is generally inferior in viewing property; however, the disclosed glass material of this embodiment, which includes the aforementioned optical body, can provide high viewing property even if configured as multi-layered glass.

Here, the multi-layered glass generally refers to glass structured by including a plurality of glass substrates which are laminated via spacers disposed on the circumference thereof so that spaces are defined between the glass substrates.

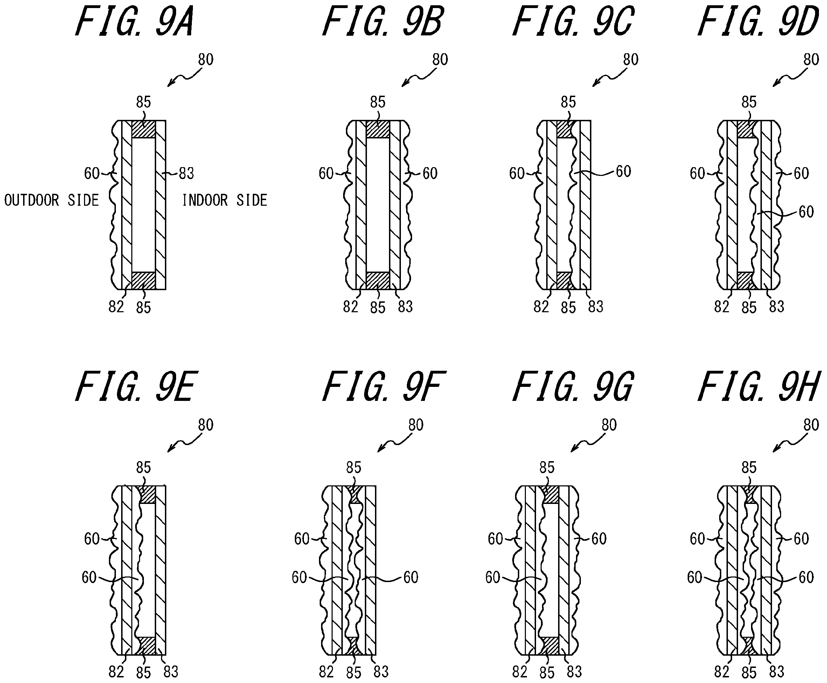

Then, the disclosed glass material 80 configured as multi-layered glass according to this embodiment may include the optical body 60 only on a face on the outdoor side of the glass substrate 82 when installed as windowpanes of architectures, as illustrated in (a) of FIG. 9. Alternatively, as illustrated in (b) and (d) of FIG. 9, the optical body 60 may be disposed on a face on the outdoor side of the glass substrate 82 that will be disposed on the outdoor side, and the optical body 60 may also be disposed on only one face or both faces of the glass substrate 83 to be disposed on the indoor side. Further, as illustrated in (e) to (h) of FIG. 9, the optical body 60 may be disposed on both faces of the glass substrate 82 to be disposed on the outdoor side, and optionally, the optical body 60 may be disposed on one or both faces of the glass substrate 83 to be disposed on the indoor side.

Further, in the case where the glass material of this embodiment is multi-layered glass and an optical body is disposed on a face on the outdoor side of the glass substrate when installed as windowpanes in architecture, a visible light absorbing adhesive layer may particularly be preferred to be disposed on the optical body at a face opposite to a face where the first transparent inorganic layer is disposed (more specifically, between the optical body and the glass substrate). The visible light absorbing adhesive layer may thus be disposed, so as to efficiently absorb: visible light that has passed through the optical body to be incident on the adhesive layer; visible light that has passed through the optical body and the adhesive layer and reflected by a face on the outdoor side of the glass substrate on the outdoor side to be incident on the adhesive layer; and visible light that has passed through the optical body, the adhesive layer, and the glass substrate on the outdoor side to be incident on the adhesive layer, to thereby reduce the visible light transmittance while maintaining high viewing property, so as to overcome the problem of anti-glare that would be often faced by multi-layered glass.

EXAMPLES

Next, the present disclosure is more specifically explained with reference to Examples and Comparative Examples. However, the present disclosure is not limited to the following Examples.

(Examples 1 to 4, Comparative Examples 1 to 4)

A base material formed of PET ("A4300" manufactured by Toyobo Co., Ltd., thickness 50 $\mu$m) was prepared, on which a fine concavo-convex layer having a micro concavo-concave surface was formed by a shape transfer method using a composition containing an acrylic ultraviolet curable resin. In forming the fine concavo-convex layer, conditions of the shape transfer method were adjusted as appropriate by, for example, modifying the surface shape of the master disc, so that parameters relating to the surface (such as Ra: an arithmetic mean roughness (nm), RSm: a mean length of a rough curve element ($\mu$m), R$\Delta$q: a root mean square gradient of a rough curve element) each have the values shown in Table 1. Then, on the fine concavo-convex surface of the fine concavo-convex layer, an SiO$_x$ layer (4 nm) was laminated as an adhesion layer, on which a ZnO layer (200 nm) as a first transparent inorganic layer was laminated as a sputtering method, and an SiO$_2$ layer (80 nm) was further laminated as a second transparent inorganic layer on the ZnO layer, to thereby obtain an optical body (optical body with no soda-lime glass bonded thereon). Then, in the optical body, a fine concavo-convex layer was formed, and an adhesive layer (base-less pressure sensitive double coated tape, "MHM-FW25" manufactured by NICHIEI KAKOH CO., LTD., thickness 25 $\mu$m) was laminated on a face opposite to the face on which the first transparent inorganic layer and the second transparent inorganic layer were laminated, which was thereafter bonded onto a soda-lime glass having a thickness of 3 mm (float sheet glass defined by JIS R3202).

Here, Ra, RSm, and R$\Delta$q of the fine concavo-convex layer were calculated using "VertScan R5300" manufactured by Ryoka Systems Inc. (version: VS-Measure Version 5.05.0010, CCD camera: SONY HR-57 1/3", an object lens: 5X to 50X, a lens barrel: IX Body, a wavelength filter: 530 white, measurement mode: Focus, view field size: 640×480), while conforming to JIS B0601:2001. However, the measurement method according to JIS B0601:2001 is for probing, and thus, the calculation was made without distinguishing the process, the reference length, and the evaluation length of the phase compensation filter.

The optical body thus obtained as above with no soda-lime glass bonded thereon was measured for haze by the following method. Further, an optical body with a soda-lime glass bonded thereon (single-layer glass) was measured for BRDF (Bidirectional Reflectance Distribution Function) and $\theta_1$ to $\theta_3$ by the following method while evaluating the anti-glare and viewing properties, so as to make overall judgment based on these evaluation results.

<Measurement of Haze>

Haze was measured using "NDH 7000SP" manufactured by NIPPON DENSHOKU INDUSTRIES Co., LTD, conforming to JIS K7136. The results are provided in Table 1.

<Measurement of BRDF and $\theta_1$ to $\theta_3$>

To eliminate back reflection, a black tape ("VT-50" manufactured by Nichiban Co., Ltd.) was further bonded onto the soda-lime glass bonded on the optical body. Then, the optical body was placed on a plane with the black tape side facing downward, and "Mini-Diff" manufactured by Light Tec was used to measure BRDF of this optical body when light was caused to incident at an incident angle of 60°. A vector indicating the maximum luminance value ($L_{max}$) was obtained through the measurement of BRDF, and a chart as illustrated in FIG. 7 was obtained with X-axis of reflection angle (°) and Y-axis of luminance, with respect to a plane including the vector and a normal vector of the optical body, the normal vector passing through the incident point of the light. Here, the chart is normalized to the maximum luminance value ($L_{max}$) being 1. Then, the width ($\theta_1$ (°)) between the reflection angles each indicating 90% luminance of $L_{max}$, the width ($\theta_2$ (°)) between the reflection angles each indicating 10% luminance of $L_{max}$, and the width ($\theta_3$ (°)) between the reflection angles each indicating 50% luminance of $L_{max}$ were obtained. Table 1 illustrates the values of $\theta_2/\theta_1$ and $\theta_3$ in Examples.

<Evaluation of Anti-Glare Property>

An optical body bonded with soda-lime glass was placed on a plane with the soda-lime glass facing downward, and measured for glossiness G at measuring angle 20°, using a portable glossmeter ("Micro-Gloss" manufactured by BYK-Gardner Inc.) and conforming to JIS Z8741. Based on the values of glossiness G, anti-glare property was evaluated in accordance with the following criteria. The results are provided in Table 1.
Glossiness G is 20 or less ··· good
Glossiness G is more than 20 ··· bad

<Evaluation of Viewing Property>

A touch-panel image clarity meter ("ICM-1T" manufactured by Suga Test Instruments Co., Ltd.) was used to measure the transmitted image clarity of the optical body bonded with soda-lime glass at an optical comb width of 2 mm, conforming to JIS K7374. Based on the values of transmitted image clarity T, viewing property was evaluated in accordance with the following criteria. The results are provided in Table 1.

Transmitted Image Clarity T is 50% or more     good
Transmitted Image Clarity T is less than 50%     bad

<Overall Judgment>

In Examples, overall judgment was defined as "good" in the case where the evaluation result for the anti-glare property and the evaluation result for the viewing property were both found "good"; overall judgment was defined as "bad" in the case where either one of the evaluation results was not found "good". The results are provided in Table 1.

(Comparative Examples 5 to 7)

An ultraviolet curing resin compounded with a filler at a predetermined ratio was used as a material for forming the fine concavo-convex layer, and a configuration similar to those of Examples 1 to 3 was provided on the micro concave-convex, to thereby obtain an optical body. Then, the optical body was measured for haze, BRDF, and $\theta_1$ to $\theta_3$ in the similar manner as above, and also evaluated for anti-glare property and viewing property, so as to make overall judgment based on these evaluation results. The results are provided in Table 1.

(Comparative Example 8)

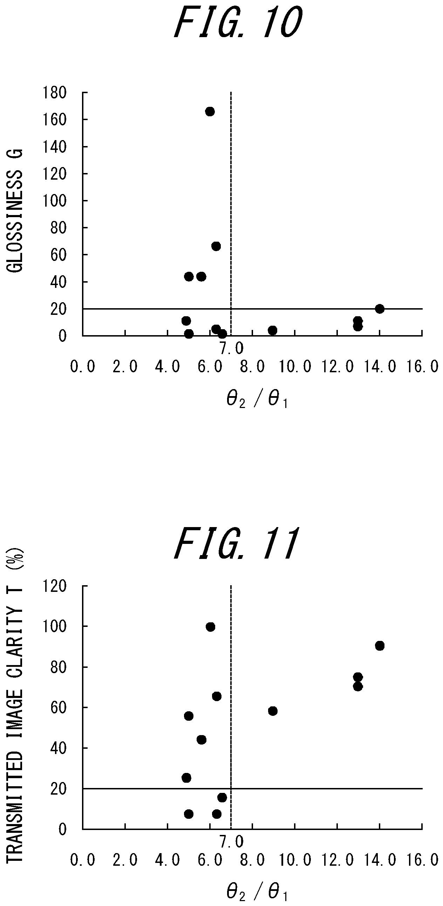

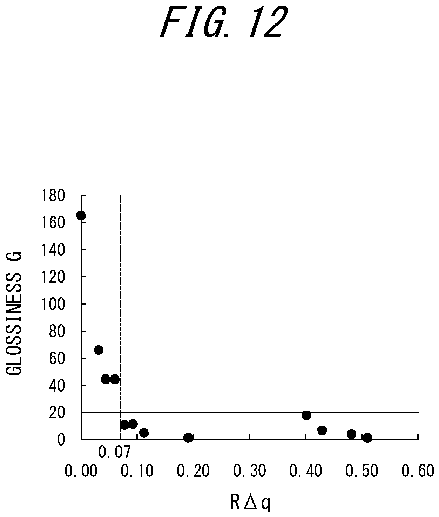

The soda-lime glass of 3 mm thick used in the aforementioned measurement of BRDF was used as itself, which was measured for haze, BRDF, and $\theta_1$ to $\theta_3$, similarly to the above, while being evaluated for anti-glare property and viewing property, so as to make overall judgment based on these evaluation result. The results are provided in Table 1.
Here, FIG. 10 illustrates a plot with $\theta_2/\theta_1$ on the X-axis and the glossiness G on the Y-axis; FIG. 11 illustrates a plot with $\theta_2/\theta_1$ on the X-axis and transmitted image clarity T on the Y-axis; and FIG. 12 illustrates a plot with RΔq on the X-axis and glossiness G on the Y-axis, the plots being obtained using the measurement results of Examples 1 to 4 and Comparative Examples 1 to 8.

[Table 1]

| | Ra (nm) | RSm (nm) | RΔq | haze (%) | $\theta_2/\theta_1$ | $\theta_3$ (°) | Glossiness G | Anti-Glare Property Evaluation | Transmitted Image Clarity T (%) | Viewing Property Evaluation | Overall Judgment |
|---|---|---|---|---|---|---|---|---|---|---|---|
| Example 1 | 126.6 | 5.5 | 0.40 | 38.5 | 14.0 | 6.0 | 19.6 | good | 92.1 | good | good |
| Example 2 | 162.1 | 5.9 | 0.43 | 49.5 | 13.0 | 19.0 | 7.1 | good | 71.1 | good | good |
| Example 3 | 201.4 | 5.6 | 0.48 | 60.2 | 9.0 | 25.0 | 3.8 | good | 58.9 | good | good |
| Example 4 | 177.3 | 36.1 | 0.07 | 42.5 | 13.0 | 16.5 | 10.4 | good | 75.4 | good | good |
| Comp. Example 1 | 246.7 | 6.7 | 0.51 | 73.3 | 6.6 | 46.0 | 1.7 | good | 15.8 | bad | bad |
| Comp. Example 2 | 192.7 | 21.3 | 0.09 | 26.1 | 4.9 | 16.5 | 11.0 | good | 25.7 | bad | bad |
| Comp. Example 3 | 2322.3 | 157.6 | 0.11 | 49.0 | 6.3 | 19.0 | 4.8 | good | 7.4 | bad | bad |
| Comp. Example 4 | 1605.9 | 67.1 | 0.19 | 82.7 | 5.0 | 59.0 | 1.1 | good | 7.7 | bad | bad |
| Comp. Example 5 | 104.0 | 43.4 | 0.03 | 14.4 | 6.3 | 6.5 | 66.3 | bad | 66.3 | good | bad |
| Comp. Example 6 | 129.4 | 37.8 | 0.04 | 20.7 | 5.0 | 7.5 | 44.3 | bad | 56.3 | good | bad |
| Comp. Example 7 | 182.6 | 36.0 | 0.05 | 41.3 | 5.6 | 9.0 | 44.6 | bad | 44.6 | bad | bad |

(continued)

|  | Ra (nm) | RSm (nm) | RΔq | haze (%) | $\theta_2/\theta_1$ | $\theta_3$ (°) | Glossiness G | Anti-Glare Property Evaluation | Transmitted Image Clarity T (%) | Viewing Property Evaluation | Overall Judgment |
|---|---|---|---|---|---|---|---|---|---|---|---|
| Comp. Example 8 | 0.6 | 6.1 | 0.00 | 0.5 | 6.0 | 4.5 | 166.0 | bad | 100.0 | good | bad |

As can be seen from Table 1 and FIGS. 10, 11, an optical body in which $\theta_2/\theta_1$ calculated from BRDF is larger than 7 is low in glossiness while high in transmitted image clarity; that is, the optical body is high in both anti-glare property and viewing property.

Here, referring to FIG. 12, R$\Delta$q and glossiness G have a certain degree of correlation, which shows that R$\Delta$q of 0.07 or more can attain sufficiently low glossiness, i.e., sufficient improvement in anti-glare property.

Next, the following experiments were performed in order to make clear the properties in a case where the optical body has a visible light absorbing adhesive layer and in a case where the optical body was used in multi-layered glass.

(Examples 5 to 8)

Optical bodies each bonded with soda-lime glass were obtained, which were similarly formed as in Example 1 except in that the base-less pressure sensitive double coated adhesive tape used in Example 1, in which a visible light absorbing coloring agent was dispersed at four different levels to adjust transmittance (visible light absorbing adhesive layer) was used as as the adhesive layer. The optical body bonded with the soda-lime glass were measured for visible light transmittance (%) using "V-560" manufactured by JASCO Corporation. For comparison, the optical bodies of Example 1 and Comparative Example 8 were also measured for visible light transmittance (%). Further, as to the optical bodies according to Comparative Example 8 and Examples 1, 5 to 8, solar transmittance ($\tau_e$) and solar absorptance ($\rho_e$) were measured using "UH4150" manufactured by Hitachi High-Tech Science Corporation and conforming to JIS A5759, so as to measure solar absorptance ($\alpha_e$)(%) by $\alpha_3=100-\tau_e-\rho_e$.

Further, the optical bodies bonded with soda-lime glass were each measured for glossiness G and transmitted image clarity T using the same method as in Example 1, so as to evaluate anti-glare property and viewing property. The results are provided in Table 2.

(Comparative Example 9, Examples 9 to 13)

Comparative Example 9 used multi-layered glass formed of two soda-lime glass sheets of 3 mm thick (float sheet glass defined by JIS R3202) which were laminated via spacers of 50 $\mu$m thick disposed on the circumference thereof.

Examples 9 to 13 each used multi-layered glass (configured as (a) of FIG. 9) formed of the optical body with soda-lime glass bonded thereon as obtained in Example 1 and Examples 5 to 8, and laminated with soda-lime glass of 3 mm thick (float sheet glass defined by JIS R3202) on the soda-lime glass side of the optical body via spacers of 50 $\mu$m thick disposed on the circumference thereof.

The aforementioned multi-layer glass was measured for visible light transmittance (%) with methods similar to those of Examples 5 to 18, while measuring glossiness G and transmitted image clarity T, to thereby evaluate the anti-glare property and the viewing property. Here, the anti-glare property of the aforementioned multi-layered glass was evaluated based on the value of glossiness G, in accordance with the following criteria. The results are provided in Table 2.

| | |
|---|---|
| Glossiness G is 60 or less | good |
| Glossiness G is more than 60 | bad |

[Table 2]

| | single layer/ multi layer | Coloring Agent Dispersion Level | Visible Light Transmittance (%) | Solar Absorptance (%) | Glossiness G | Evaluation of Anti-Glare Property | Transmitted Image Clarity T (%) | Evaluation of Viewing Property |
|---|---|---|---|---|---|---|---|---|
| Comp. Example 8 | single layer | - | 90.4 | 4.6 | 166.0 | bad | 100.0 | good |
| Example 1 | single layer | none | 87.6 | 9.3 | 19.6 | good | 92.1 | good |
| Example 5 | single layer | 1 | 76.6 | 14.3 | 15.7 | good | 92.0 | good |
| Example 6 | single layer | 2 | 67.3 | 18.7 | 12.5 | good | 91.8 | good |
| Example 7 | single layer | 3 | 51.6 | 27.7 | 8.0 | good | 91.7 | good |
| Example 8 | single layer | 4 | 30.3 | 42.4 | 3.3 | good | 90.0 | good |
| Comp. Example 9 | multi layer | - | 82.2 | (unmeasured) | 284.0 | bad | 99.2 | good |
| Exampe 9 | multi layer | none | 79.4 | (unmeasured) | 51.1 | good | 91.3 | good |
| Example 10 | multi layer | 1 | 69.5 | (unmeasured) | 37.0 | good | 90.2 | good |
| Example 11 | multi layer | 2 | 61.0 | (unmeasured) | 26.1 | good | 90.2 | good |
| Example 12 | multi layer | 3 | 46.8 | (unmeasured) | 15.0 | good | 91.2 | good |
| Example 13 | multi layer | 4 | 27.4 | (unmeasured) | 6.1 | good | 89.1 | good |

EP 3 438 708 A1

As can be seen from Table 2, when a visible light absorbing adhesive layer or the like is disposed to lower the the visible light transmittance, the glossiness G is lowered proportional to the visible light transmittance, with no significant variation can be seen in the transmitted image clarity T. In other words, the reduction in visible light transmittance can be found to provide an effect of improving the anti-glare property without deteriorating the viewing property. Then, as can be seen from Table 2, the effect of improving the anti-glare property through the reduction of visible light transmittance is more significant in multi-layered glass than in single-layer glass.

(Examples 14, 15)

Next, the following experiments were made in order to make clear the properties of an optical body with no soda-lime glass bonded thereon and the properties of an optical body with no second transparent inorganic layer laminated thereon.

In Example 14, an "optical body with no soda-lime glass bonded thereon" of Example 1 was used.

In Example 15, an optical body (optical body bonded with soda-lime glass) was used, which was similarly obtained as in Example 1, except in that the optical body has no $SiO_2$ layer as the second transparent inorganic layer laminated thereon.

Then, these optical bodies, were measured for BRDF and $\theta_1$ to $\theta_3$ using the same method as in Example 1, while anti-glare property and viewing property were evaluated, so as to make overall judgment based on these evaluation results. The results are provided in Table 3, together with the results for Example 1.

[Table 3]

| | Ra (nm) | RSm (nm) | RΔq | $\theta_2/\theta_1$ | $\theta_3$ (°) | Glossiness G | Anti-Glare Property Evaluation | Transmitted Image Clarity T (%) | Viewing Property Evaluation | Overall Judgment |
|---|---|---|---|---|---|---|---|---|---|---|
| Example 1 | 126.6 | 5.5 | 0.40 | 14.0 | 6.0 | 19.6 | good | 92.1 | good | good |
| Example 14 | 124.2 | 5.8 | 0.40 | 14.0 | 6.0 | 19.5 | good | 92.2 | good | good |
| Example 15 | 127.1 | 5.6 | 0.40 | 14.0 | 6.0 | 19.8 | good | 92.3 | good | good |

As can be seen from Table 3, there is no significant difference in anti-glare property and viewing property of the optical body between the cases where soda-lime glass was bonded or not bonded thereon. Further, referring to Table 3, there is no significant difference in anti-glare property and viewing property of the optical body between cases where the second transparent inorganic layer is laminated or not laminated thereon.

(Examples 16 to 18)

<Identification of Wavelength of Light that may accelerate Degradation of Base Material>

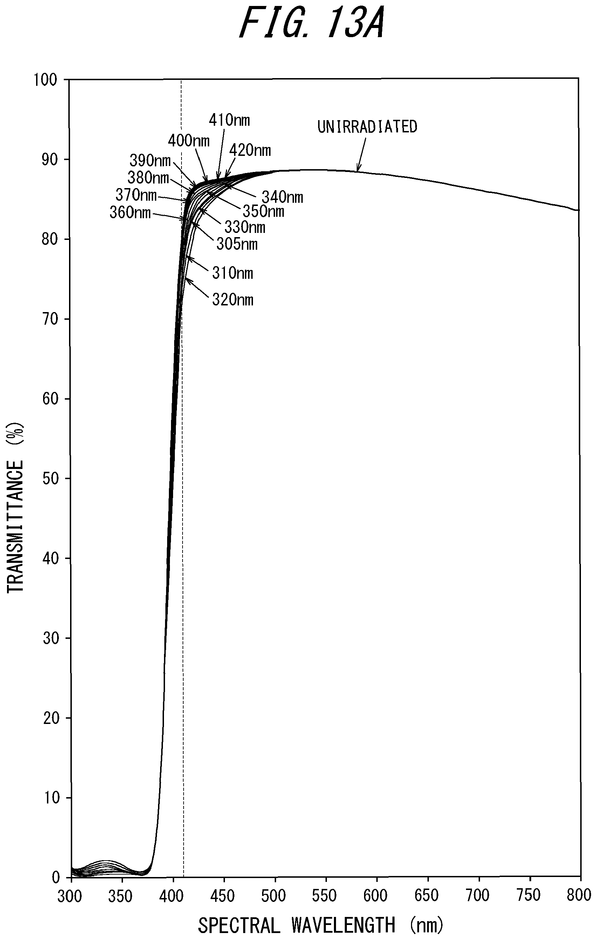

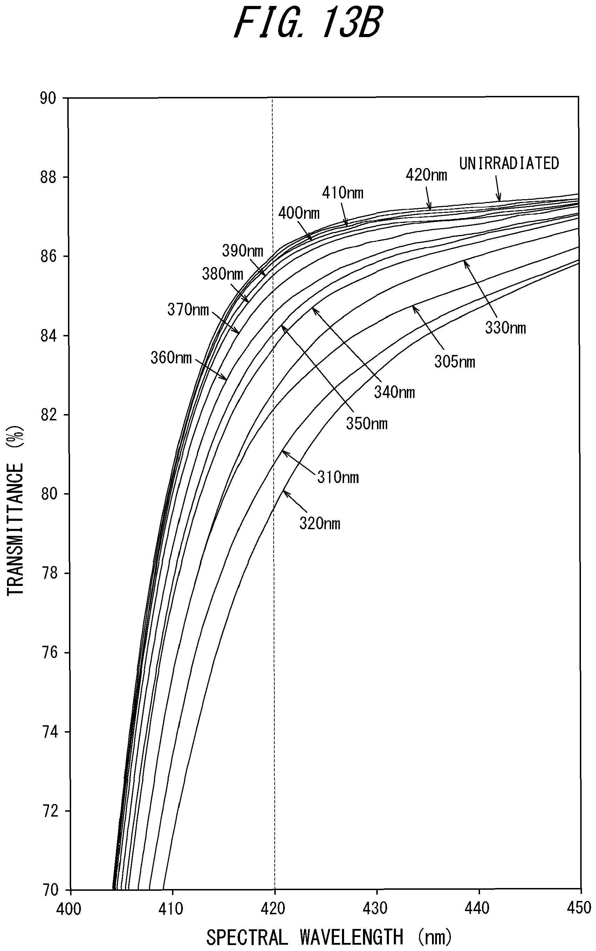

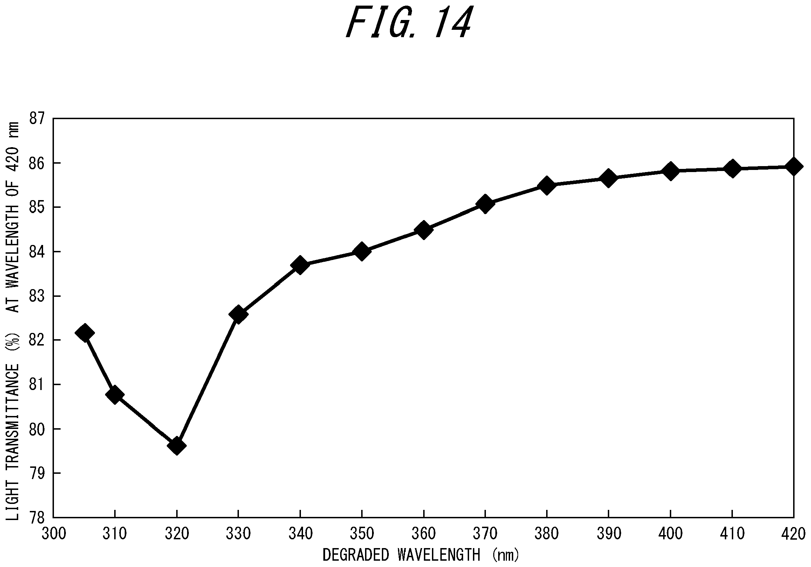

A fine concavo-convex layer having a fine concavo-convex surface was formed on a base material made of PET, by a shape transfer method using a composition containing ultraviolet curing resin, and thereafter, soda-lime glass of 3 mm thick was bonded on a face opposite to the face where a fine concavo-convex layer is formed, to thereby obtain an optical body. Then, the optical body was spectrally irradiated on the fine concavo-convex layer side so as to be degraded, using a spectral aging testing machine ("SPX" manufactured by Suga Test Instruments Co., Ltd.), at a temperature of 60°C and integrated irradiance of 89327 kJ/m$^2$. The optical bodies having been thus irradiated were measured for transmittance spectrum for each wavelength of irradiated light (degraded wavelength) (305 nm, and 310 nm to 420 nm at 10 nm pitch). The results are provided in FIG. 13A (spectral wavelength of 300 nm to 800 nm) and FIG. 13B (enlarged view of the range of spectral wavelength of 400 nm to 450 nm). As can be seen from FIGS. 13A and 13B, the transmittance at a spectral wavelength of 420 nm makes the most significant change for each degraded wavelength. Then, FIG. 14 illustrates a relation between a degraded wavelength and a light transmittance at wavelength of 420 nm, observed for the optical body that has been irradiated. As understood from FIG. 14, the degraded wavelength of 350 nm or less, in particular, 320 nm would greatly reduce the transmittance of the optical body. In other words, in order to suppress degradation of the optical body such as yellowing in the base material and deterioration of adhesion durability between the base material and the resin layer, it is important to prevent light with a wavelength of 350 nm or less, in particular, of 320 nm.

<Measurement of Irradiation Amount to allow Degree of Yellowness ΔYI to reach 6>

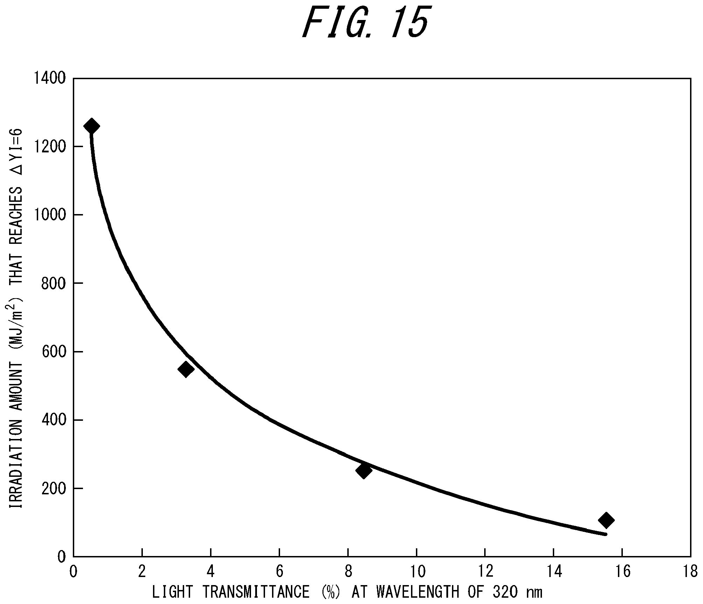

The optical bodies of Examples 16 to 18 (optical bodies bonded with soda-lime glass) were obtained similarly to Example 1 except in that the thickness of ZnO layer as the first transparent inorganic layer was changed as illustrated in Table 4. Then, the optical bodies thus obtained were measured for light transmittance at wavelength of 320 nm, using "V-560" manufactured by JASCO corporation. Further, "EYE Super UV Tester SUV-W161" manufactured by Iwasaki Electric Co., Ltd. was used to irradiate the optical bodies thus obtained with ultraviolet rays at an illuminance of 100 mW/cm$^2$ (measured conforming to JIS C1613) using a metal halide lamp as a light source, so as to measure the irradiation amount (MJ/m$^2$) that reaches the degree of yellowness ΔYI=6 (threshold value for recognition of changes in color). The results are provided in Table 4 and FIG. 15, together with the results for the optical body of Example 1.

[Table 4]

| | Thickness (nm) of First Transparent Inorganic Layer (ZnO Layer) | Thickness (nm) of Second Transparent Inorganic Layer (SiO$_2$ Layer) | Light Transmittance (%) at Wavelength of 320 nm | Irradiation Amount (MJ/m$_2$) that reaches ΔYI=6 |
|---|---|---|---|---|
| Example 16 | 85 | 80 | 15.5 | 108 |
| Example 17 | 122 | 80 | 8.4 | 256 |
| Example 1 | 200 | 80 | 3.2 | 550 |
| Example 18 | 267 | 80 | 0.5 | 1260 |

As can be seen from Table 4 and FIG. 15, a high correlation is found between the light transmittance at wavelength of 320 nm and the irradiation amount that reaches the degree of yellowness ΔYI=6. Thus, the light transmittance at wavelength of 320 nm may be, for example, 10% or less, preferably 6% or less, and more preferably 3% or less, so as to effectively suppress degradation of the base material such as yellowing due to ultraviolet rays.

Here, for reference, an annual irradiation amount in the south side of Tokyo is calculated as approximately 202

$MJ/m^2$, when sunlight is converted into energy in the ultraviolet region. Based on this calculated value and FIG. 5, the period the optical body takes to reach the degree of yellowness ΔYI=6 may be considered as about 1 year with the light transmittance of 10.5%, about 2 years with the transmittance of 6%, and 3 years with the transmittance of 3.5%, at a wavelength of 320 nm.

(Example 19)

Next, the following experiment was conducted in order to make clear the property of the optical body including a soil-resistant coating layer.

The optical body similar to that of Example 1 was prepared, and a soil-resistant layer (10 nm) made of perfluoropolyether was formed on the $SiO_2$ layer as the second transparent inorganic layer, to thereby obtain the optical body of Example 19. The optical body of Example 19 thus obtained and the optical body of Example 1 were measured for pure water contact angle and hexadecane contact angle, and evaluated for soil resistance, by the following method.

<Measurement of Contact Angle>

A fully-automatic contact angle gauge "DM700" manufactured by Kyowa Interface Science Co., Ltd was used to measure the contact angle in the outermost surface on the fine concavo-convex layer side of the optical body, using pure water and hexadecane respectively as testing liquids. Here, as the measurement condition, the liquid volume was set to: 2 ml, waiting time for the measurement was set to: 1000 ms, and the fitting method used a θ/2 method. The results are provided in Table 5.

<Evaluation of Soil-Resistance>

An oil-based pen was used to scribble on the outermost surface of the fine concavo-convex layer of the optical body, and thereafter, adhesion state of the ink was visually identified. The adhesion state was evaluated as: good when the ink was repelled to coagulate as granules; and poor when the ink was stay adhered on the surface without being repelled. Further, the ink scribbled on the surface was dry-wiped with a commercially-available tissue so as to evaluate wiping performance. The wiping performance was evaluated as good when the ink was readily wiped off, or otherwise evaluated as poor. The results are provided in Table 5.

[Table 5]

|  | Contact Angle (°) | | Evaluation of Soil-Resistance | |
| --- | --- | --- | --- | --- |
|  | pure water | hexadecane | adhesion state | wiping performance |
| Example 19 | 126 | 73 | good | good |
| Example 1 | 55 | 12 | poor | poor |

As can be seen from Table 5, the soil-resistant layer may be provided on the outermost surface on the fine concavo-convex layer of the optical body, so as to prevent soil from attaching to the optical body and also to readily remove soil attached.

INDUSTRIAL APPLICABILITY

The disclosed optical body as provided herein is excellent in anti-glare property and viewing property, and the disclosed glass material as provided herein is excellent in anti-glare property and viewing property.

REFERENCE SIGNS LIST

| 1 | shape transfer system |
| 2 | master disc |
| 51 | base material supply roll |
| 52 | winding roll |
| 53, 54 | guide roll |

| 55 | nip roll |
|---|---|
| 56 | peeling roll |
| 57 | coating device |
| 58 | light source |
| 60 | optical body |
| 61 | base material |
| 62 | resin layer |
| 63 | fine concavo-convex layer |
| 64 | first transparent inorganic layer |
| 65 | second transparent inorganic layer |
| 80 | glass material |
| 81, 82, 83 | glass base material |
| 84 | adhesive layer |
| 85 | spacer |

**Claims**

1. An optical body comprising a fine concavo-convex layer and a first transparent inorganic layer,
the first transparent inorganic layer being disposed on a fine concavo-convex surface side of the fine concavo-convex layer;
the optical body satisfying $\theta_2/\theta_1>7$, in a graph with X-axis of reflection angle (°) and Y-axis of luminance, the graph being prepared in relation to a plane by collecting luminance data of reflection light toward all the vectors obtained when light is caused to incident at an incident angle of 60° from the first transparent inorganic layer side of the optical body, and by selecting the plane including a vector representing the maximum luminance value ($L_{max}$) from the incident point of the light and a normal vector to the optical body, the normal vector passing through the incident point of the light, where $\theta_1$ (°) represents the width between the reflection angles each indicating 90% luminance of $L_{max}$ and $\theta_2$ (°) represents the width between the reflection angles each indicating 10% luminance of $L_{max}$.

2. The optical body according to claim 1, wherein the optical body has a glossiness of 20 or less at a measurement angle of 20° and a transmitted image clarity of 50% or more at an optical comb width of 2 mm.

3. The optical body according to claim 1 or 2, wherein the fine concavo-convex surface of the fine concavo-convex layer has a root mean square gradient $R\Delta q$ of 0.07 or more.

4. The optical body according to any of claims 1 to 3, wherein the first transparent organic layer contains, as a main component, an inorganic compound having a band gap of 3.0 eV or more and 3.7 eV or less.

5. The optical body according to any of claims 1 to 4, wherein the first transparent organic layer includes at least any of ZnO and $CeO_2$.

6. The optical body according to any of claims 1 to 5, wherein the first transparent organic layer has a thickness of 70 nm or more and 400 nm or less.

7. The optical body according to any of claims 1 to 6, comprising a soil-resistant coating layer on the first transparent inorganic layer.

8. The optical body according to any of claims 1 to 6, further comprising a second transparent inorganic layer on the first transparent inorganic layer.

9. The optical body according to claim 8, wherein the second transparent inorganic layer contains, as a main component, an inorganic compound having a band gap that is 4.0 eV or more larger than the band gap of a main component of the first transparent inorganic layer.

10. The optical body according to claim 8 or 9, wherein the second transparent inorganic layer includes at least any of $SiO_2$, SiN, SiON, and $MgF_2$.

11. The optical body according to any of claims 8 to 10, wherein the second transparent inorganic layer has a thickness of 40 nm or more and 140 nm or less.

12. The optical body according to any of claims 8 to 11, comprising a soil-resistant coating layer on the second transparent inorganic layer.

13. The optical body according to any of claims 1 to 12, wherein the optical body has a visible light transmittance of 20% or more and 90% or less.

14. The optical body according to any of claims 1 to 13, wherein the optical body has a solar absorption of 45% or less.

15. The optical body according to any of claims 1 to 14, wherein the optical body has a light transmittance of 10% or less at a wavelength of 320 nm.

16. A glass material comprising a glass substrate and the optical body according to any of claims 1 to 15.

17. The glass material of claim 16, the glass material comprises multi-layered glass.

# FIG. 1

*FIG. 2*

*FIG. 3*

*FIG. 4*

## FIG. 5A

THICKNESS OF SECOND TRANSPARENT
INORGANIC LAYER (SiO₂ LAYER)

------- 0nm

----- 20nm

---- 40nm

········ 60nm

--- 80nm

——— 100nm

THICKNESS [nm] OF FIRST TRANSPARENT INORGANIC LAYER (ZnO LAYER)

## FIG. 5B

THICKNESS OF SECOND TRANSPARENT
INORGANIC LAYER (SiO₂ LAYER)

········ 120nm

--- 140nm

——— 160nm

THICKNESS [nm] OF FIRST TRANSPARENT INORGANIC LAYER (ZnO LAYER)

# FIG. 6

FIG. 7

# FIG. 8

FIG. 9A

FIG. 9B

FIG. 9C

FIG. 9D

FIG. 9E

FIG. 9F

FIG. 9G

FIG. 9H

## FIG. 10

## FIG. 11

...

# FIG. 12

# FIG. 13A

# FIG. 13B

# FIG. 14

EP 3 438 708 A1

*FIG. 15*

# INTERNATIONAL SEARCH REPORT

| | International application No. |
|---|---|
| | PCT/JP2017/012169 |

**A. CLASSIFICATION OF SUBJECT MATTER**

*G02B5/02*(2006.01)i, *B32B7/02*(2006.01)i, *B32B9/00*(2006.01)i, *B32B17/06* (2006.01)i, *C03C17/42*(2006.01)i, *G02B1/18*(2015.01)i

According to International Patent Classification (IPC) or to both national classification and IPC

**B. FIELDS SEARCHED**

Minimum documentation searched (classification system followed by classification symbols)
G02B5/02, B32B7/02, B32B9/00, B32B17/06, C03C17/42, G02B1/18

Documentation searched other than minimum documentation to the extent that such documents are included in the fields searched
Jitsuyo Shinan Koho        1922–1996   Jitsuyo Shinan Toroku Koho   1996–2017
Kokai Jitsuyo Shinan Koho  1971–2017   Toroku Jitsuyo Shinan Koho   1994–2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2009-244382 A  (Sharp Corp.),<br>22 October 2009 (22.10.2009),<br>paragraphs [0040], [0105], [0109], [0119],<br>[0133], [0138], [0141] to [0145]<br>& US 2009/0246415 A1<br>paragraphs [0045], [0121], [0126], [0137],<br>[0152], [0157], [0160] to [0164] | 1-14,16<br>15,17 |
| Y | JP 2011-133721 A  (Tokai Rubber Industries,<br>Ltd.),<br>07 July 2011 (07.07.2011),<br>paragraph [0063]<br>(Family: none) | 15 |

☒  Further documents are listed in the continuation of Box C.        ☐  See patent family annex.

| | |
|---|---|
| *     Special categories of cited documents:<br>"A"   document defining the general state of the art which is not considered    to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 07 June 2017 (07.06.17) | 20 June 2017 (20.06.17) |

| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |
|---|---|

Form PCT/ISA/210 (second sheet) (January 2015)

**INTERNATIONAL SEARCH REPORT**

| International application No. |
|---|
| PCT/JP2017/012169 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 10-128899 A  (Nippon Kayaku Co., Ltd.),<br>19 May 1998 (19.05.1998),<br>paragraphs [0006], [0021], [0029]<br>(Family: none) | 17 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016071410 A